# EUROPEAN PATENT SPECIFICATION

(11) **EP 1 833 756 B1**
(45) Date of publication and mention of the grant of the patent: **24.12.2008**
(21) Application number: 05825505.0
(22) Date of filing: 22.11.2005
(51) Int. Cl.: B82B 3/00

(54) **METHOD FOR MAKING NANOSTRUCTURED SURFACES**
VERFAHREN ZUR HERSTELLUNG VON NANOSTRUKTURIERTEN OBERFLÄCHEN
PROCEDE DE REALISATION DE SURFACES NANOSTRUCTUREES

(30) Priority: 24.11.2004 US 997445
(43) Date of publication of application: 19.09.2007
(73) Proprietor: 3M Innovative Properties Company, St. Paul MN 55133-3427 (US)
(72) Inventor: SAHOUANI, Hassan 3M Center, Saint Paul, MN 55133-3427 (US)
(74) Representative: Vossius & Partner
(86) International application number: PCT/US2005/042446
(87) International publication number: WO 2006/058072

(56) References cited:
- US-A- 5 948 487
- US-A1- 2002 066 885
- US-A1- 2002 132 065

## Description

This invention relates to methods for making nanostructured surfaces using chromonic compounds.

The properties (for example, chemical, physical, electrical, optical, and magnetic properties) of materials depend, in part, on their atomic structure, microstructure, and grain boundaries or interfaces. Materials structured in the nanoscale range (that is, in the 0.1 to 100 nm range) have therefore been attracting interest because of their unique properties as compared to conventional materials. As a result, there has been increasing research effort to develop nanostructured materials for a variety of technological applications such as, for example, electronic and optical devices, labeling of biological material, magnetic recording media, and quantum computing.

Numerous approaches have been developed for synthesizing/fabricating nanostructured materials. Approaches include, for example, using milling or shock deformation to mechanically deform solid precursors such as, for example, metal oxides or carbonates to produce a nanostructured powder (see, for example, Pardavi-Horvath et al., IEEE Trans. Magn., 28, 3186 (1992)), and using sol-gel processes to prepare nanostructured metal oxide or ceramic oxide powders and films (see, for example, (U.S. Patent No. 5,876,682 (Kurihara et al.), and Brinker et al., J. Non-Cryst. Solids, 147 - 148; 424 - 436 (1992)).

US 2002/066885 describes an alignment structure comprising a substrate having disposed thereon an oriented layer of a chromonic liquid crystalline material, wherein the chromonic liquid crystalline material comprises a chromonic material and a pre-tilt additive.

US 2002/132065 discloses a liquid crystal cell comprising: a first substrate having disposed thereon an oriented layer of a colorless, nonpolymeric, lyotropic liquid crystal material; a second substrate; and liquid crystal material disposed between the first and second substrates on the oriented layer and aligned by the oriented layer.

It has been recognized that there is a need for a method for making nanostructured surfaces that provides control over the size and shape of the nanostructures, as well as their orientation and distribution, over a relatively large area.

The present invention provides a method of making nanostructured surfaces comprising:
(a) making an aqueous mixture comprising (i) a discontinuous phase comprising a water-soluble polymer, (ii) a continuous phase comprising a chromonic material, and (iii) a non-ionic surfactant;
(b) applying said mixture onto the surface of a substrate;
(c) allowing said mixture to dry; and
(d) removing said water-soluble polymer after said mixture is dry.

In a further embodiment the invention relates to a method of making nanostructured surfaces comprising:
(a) making an aqueous mixture comprising (i) a discontinuous phase comprising a water-soluble polymer and water-insoluble particles, (ii) a continuous phase comprising a chromonic material, and (iii) a non-ionic surfactant;
(b) applying said mixture onto the surface of a substrate; and
(c) allowing said mixture to dry.

In yet another embodiment an aqueous composition is disclosed which comprises: a water-soluble polymer, a chromonic material, a non-ionic surfactant, and at least one of (i) water-insoluble particles and (ii) a metal salt.

As used herein, "chromonic materials" (or "chromonic compounds") refers to large, multi-ring molecules typically characterized by the presence of a hydrophobic core surrounded by various hydrophilic groups (see, for example, Attwood, T.K., and Lydon, J.E., Molec. Crystals Liq. Crystals, 108, 349 (1984)). The hydrophobic core can contain aromatic and/or non-aromatic rings. When in solution, these chromonic materials tend to aggregate into a nematic ordering characterized by a long-range order.

The method of the invention enables the fabrication of surfaces having relatively uniformly sized and shaped nanostructures. The method further enables relatively uniform distribution and long-range orientation or order of the nanostructures over a relatively large area.

Thus, the method of the invention meets the need in the art for an improved method for making nanostructured surfaces.

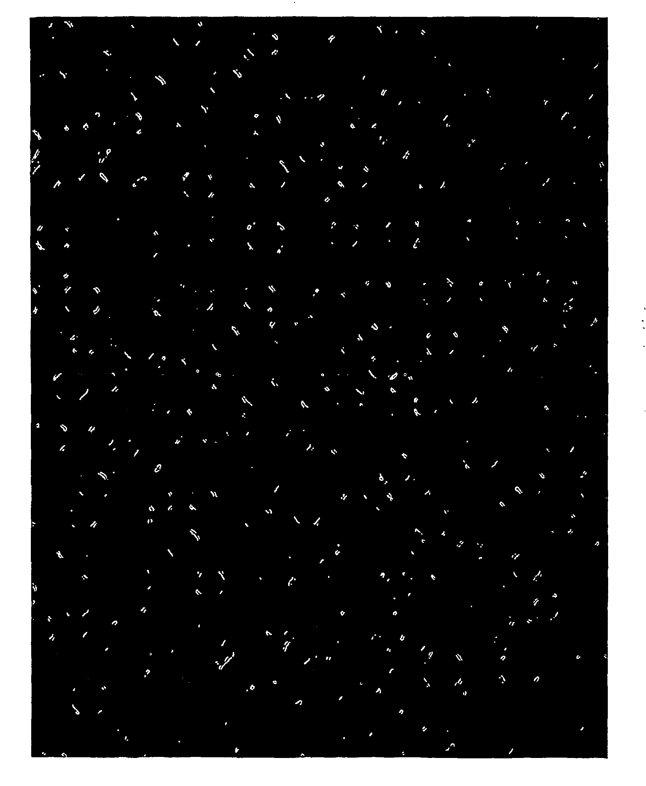

The figure is an optical micrograph showing a nanostructured surface comprising polyvinyl alcohol in a chromonic matrix.

Any chromonic material can be useful in the method of the invention. Compounds that form chromonic phases are known in the art, and include, for example, xanthoses (for example, azo dyes and cyanine dyes) and perylenes (see, for example, Kawasaki et al., Langmuir 16, 5409 (2000), or Lydon, J., Colloid and Interface Science, 8, 480 (2004)). Representative examples of useful chromonic materials include di- and mono-palladium organyls, sulfamoyl-substituted copper phthalocyanines, and hexaaryltryphenylene.

Preferred chromonic materials include those represented by one of the following general structures: 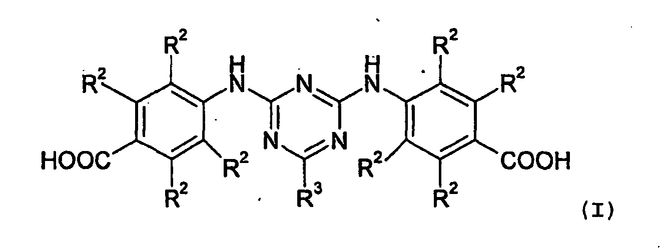 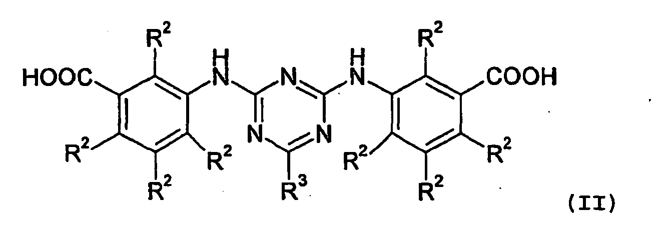 wherein
each R² is independently selected from the group consisting of electron donating groups, electron withdrawing groups, and electron neutral groups, and
R³ is selected from the group consisting of substituted and unsubstituted heteroaromatic rings and substituted and unsubstituted heterocyclic rings, the rings being linked to the triazine group through a nitrogen atom within the ring of R³.

As depicted above, the chromonic compound is neutral, but it can exist in alternative forms such as a zwitterion or proton tautomer (for example, where a hydrogen atom is dissociated from one of the carboxyl groups and is associated with one of the nitrogen atoms in the triazine ring). The chromonic compound can also be a salt such as, for example, a carboxylate salt.

The general structures above show orientations in which the carboxy group is *para* with respect to the amino linkage to the triazine backbone of the compound (formula I) and in which the carboxy group is *meta* with respect to the amino linkage to the triazine backbone (formula II). The carboxy group can also be a combination of *para* and *meta* orientations (not shown). Preferably, the orientation is *para*.

Preferably, each R² is hydrogen or a substituted or unsubstituted alkyl group. More preferably, R² is independently selected from the group consisting of hydrogen, unsubstituted alkyl groups, alkyl groups substituted with a hydroxy or halide functional group, and alkyl groups comprising an ether, ester, or sulfonyl. Most preferably, R² is hydrogen.

R³ can be, but is not limited to, heteroaromatic rings derived from pyridine, pyridazine, pyrimidine, pyrazine, imidazole, oxazole, isoxazole thiazole, oxadiazole, thiadiazole, pyrazole, triazole, triazine, quinoline, and isoquinoline. Preferably, R³ comprises a heteroaromatic ring derived from pyridine or imidazole. A substituent for the heteroaromatic ring R³ can be selected from, but is not limited to, the group consisting of substituted and unsubstituted alkyl, carboxy, amino, alkoxy, thio, cyano, amide, sulfonyl, hydroxy, halide, perfluoroalkyl, aryl, ether, and ester. Preferably, the substituent for R³ is selected from the group consisting of alkyl, sulfonyl, carboxy, halide, perfluoroalkyl, aryl, ether, and alkyl substituted with hydroxy, sulfonyl, carboxy, halide, perfluoroalkyl, aryl, or ether. When R³ is a substituted pyridine, the substituent is preferably located at the 4-position. When R³ is a substituted imidazole, the substituent is preferably located at the 3-position.

Representative examples of R³ include 4-(dimethylamino)pyridinium-1-yl, 3-methylimidazolium-1-yl, 4-(pyrrolidin-1-yl)pyridinium-1-yl, 4-isopropylpyridinium-1-yl, 4-[(2-hydroxyethyl)methylamino]pyridinium-1-yl, 4-(3-hydroxypropyl)pyridinium-1-yl, 4-methylpyridinium-1-yl, quinolinium-1-yl, 4-*tert*-butylpyridinium-1-yl, and 4-(2-sulfoethyl)pyridinium-1-yl, shown below.

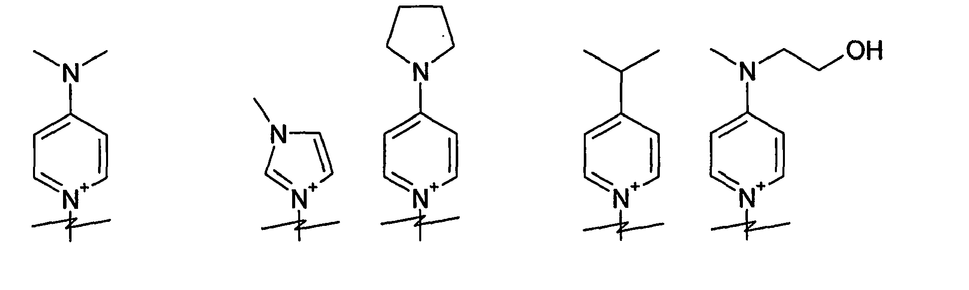

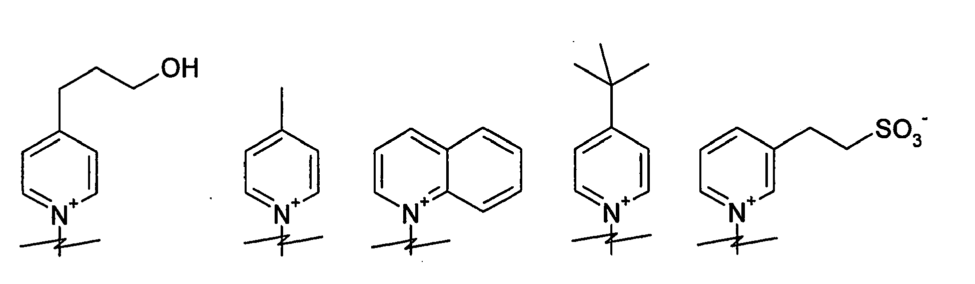

R³ can also be represented by the following general structure: 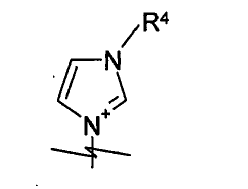 wherein R⁴ is hydrogen or a substituted or unsubstituted alkyl group. More preferably, R⁴ is selected from the group consisting of hydrogen, unsubstituted alkyl groups, and alkyl groups substituted with a hydroxy, ether, ester, sulfonate, or halide functional group. Most preferably R⁴ is selected from the group consisting of propyl sulfonic acid, methyl, and oleyl.

R³ can also be selected from heterocyclic rings such as, for example, morpholine, pyrrolidine, piperidine, and piperazine.

A preferred chromonic compound for use in the method of the invention can be represented by one of the following structures: 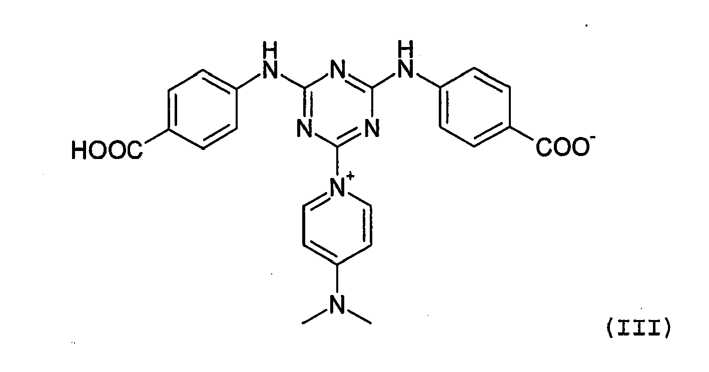 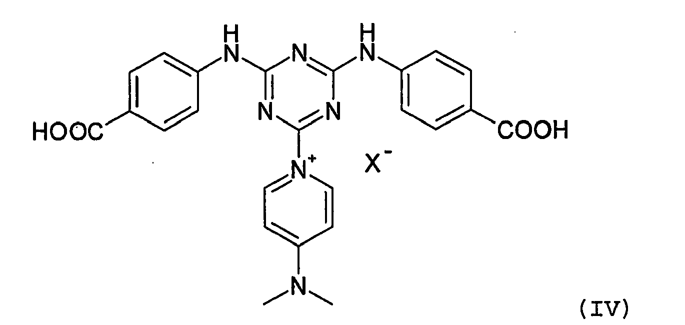 wherein X⁻ is a counterion. Preferably, X⁻ is selected from the group consisting of HSO₄⁻, Cl⁻, CH₃COO⁻, and CF₃COO⁻.

Formula III depicts the compound in its zwitterionic form. The pyridine nitrogen therefore carries a positive charge and one of the carboxy functional groups carries a negative charge (COO⁻).

The compound can also exist in other tautomeric forms such as where both carboxy functional groups carry a negative charge and where positive charges are carried by one of the nitrogens in the triazine groups and the nitrogen on the pyridine group.

As described in U.S. Patent No. 5,948,487 (Sahouani et al.), which is herein incorporated by reference in its entirety, triazine derivatives with formula I can be prepared as aqueous solutions. A typical synthetic route for the triazine molecules shown in formula I above involves a two-step process. Cyanuric chloride is treated with 4-aminobenzoic acid to give 4-{[4-(4-carboxyanilino)-6-chloro-1,3,5-triazin-2-yl]amino}benzoic acid. This intermediate is treated with a substituted or unsubstituted nitrogen-containing heterocycle. The nitrogen atom of the heterocycle displaces the chlorine atom on the triazine to form the corresponding chloride salt. The zwitterionic derivative, such as that shown in formula III above, is prepared by dissolving the chloride salt in ammonium hydroxide and passing it down an anion exchange column to replace the chloride with hydroxide, followed by solvent removal. Alternative structures, such as that shown in formula II above, may be obtained by using 3-aminobenzoic acid instead of 4-aminobenzoic acid.

Chromonic materials are capable of forming a chromonic phase or assembly when dissolved in an aqueous solution (preferably, an alkaline aqueous solution). Chromonic phases or assemblies are well known in the art (see, for example, Handbook of Liquid Crystals, Volume 2B, Chapter XVIII, Chromonics, John Lydon, pp. 981 - 1007, 1998) and consist of stacks of flat, multi-ring aromatic molecules. The molecules consist of a hydrophobic core surrounded by hydrophilic groups. The stacking can take on a number of morphologies, but is typically characterized by a tendency to form columns created by a stack of layers. Ordered stacks of molecules are formed that grow with increasing concentration.

The chromonic material is placed in aqueous solution in the presence of a non-ionic surfactant and preferably further one or more pH-adjusting compounds. The addition of pH-adjusting compounds allows the chromonic material to become more soluble in aqueous solution. Suitable pH-adjusting compounds include any known base such as, for example, ammonium hydroxide or various amines. Surfactant is added to the aqueous solution to promote wetting of the solution onto the surface of a substrate. Optional additives such as viscosity modifiers (for example, polyethylene glycol) and/or binders (for example, low molecular weight hydrolyzed starches) can also be added.

Typically, the chromonic materials are dissolved in the aqueous solution at a temperature less than about 40°C (more typically, at room temperature). One skilled in the art will recognize, however, that the geometry and size of the resulting nanostructures can be controlled to some extent by varying the temperature.

The relative concentrations of each of the components in the aqueous solution will vary with the desired size of the resulting nanostructures and their intended application. Generally, however, the chromonic material will be added to the solution to achieve a concentration in the range of about 4 to about 20 (preferably, about 4 to about 8) percent by weight of the solution.

The aqueous composition comprising a chromonic material can be mixed with a discontinuous phase comprising a water-soluble polymer. Typically, the weight ratio of water-soluble polymer to chromonic material is between about 0.01 and about 0.5:1 (preferably, less than 0.2:1). Preferably, the water-soluble polymer has a molecular weight of less than about 20,000.

Useful water-soluble polymers include, for example, polyvinyl-based water-soluble polymers, polycarboxylates, polyacrylates, polyamides, polyamines, polyglycols, and the like, and mixtures thereof. Copolymers, for example, block or random copolymers can also be useful. Preferred water-soluble polymers include, for example, polyvinyl alcohol, polyethylene glycol, polypropylene glycol, poly(ethylene glycol)-co-(propylene glycol), and mixtures thereof.

The aqueous mixture also includes a non-ionic surfactant. Preferably, the non-ionic surfactant is an alkyl glucoside surfactant.

The weight ratio of non-ionic surfactant to chromonic material is generally between about 0.01:1 and about 0.3:1. For some applications, it is preferable that the weight ratio of non-ionic surfactant to chromonic material be less than about 0.03:1, or even less than about 0.01:1

Optionally, other additives (for example, short chain alcohols such as ethanol) that increase surface tension or promote coating can be added.

The resulting mixture is applied to the surface of a substrate. Suitable substrates include any solid materials that will accept the application of the mixture (for example, glass or polymeric films).

The mixture can be applied by any useful means that provides for the ordered arrangement of the chromonic materials such as, for example, by coating techniques such as wirewound coating rod or extrusion die methods. Preferably, shear orientation or magnetic orientation is applied to the mixture either during or after application. The application of shear or magnetic force to the mixture can help promote alignment of the chromonic materials such that, upon drying, an oriented structure or matrix is obtained.

Drying of the coated layer can be achieved using any means suitable for drying aqueous coatings. Useful drying methods will not damage the coating or significantly disrupt the orientation of the coated layer imparted during coating or application.

After drying, the water-soluble polymer can be removed such that only the chromonic matrix remains on the substrate. The chromonic matrix will have holes or gaps where the water-soluble polymer used to be. The chromonic matrix can then be used as a mold to make surfaces such as, for example, surfaces comprising polymer posts in the nanometer to micrometer range. The size of the posts is dependent upon the relative concentration of the components. For example, the higher the concentration of water-soluble polymer, the larger the holes in the chromonic matrix will generally be, and thus the larger the resulting posts.

Advantageously, unlike in other systems that phase separate (for example, polymer-polymer systems), the water-soluble polymer can be easily removed from the chromonic material. For example, the water-soluble polymer can be removed by heating to a temperature higher than the temperature at which the water-soluble polymer decomposes, but lower than which the chromonic material decomposes (for example, by heating to between about 200°C and 350°C). Alternatively, the chromonic material can be rendered insoluble (for example, by protonization or amidization (that is, by reaction with diamine), or by exposure to a solution of multivalent cations thus ionically crosslinking it), and the water-soluble polymer can be removed with water.

After the water-soluble polymer has been removed, a water-insoluble polymer or a molten metal with a melting point lower than the decomposition temperature of the chromonic material (for example, indium or tin) can be applied on the chromonic matrix. The water-insoluble polymer or molten metal will go into the holes or gaps in the matrix that were formerly filled with water-soluble polymer.

Suitable water-insoluble polymers include, for example, polystyrene, polycarbonate, polymethyl-methacrylate, polyethylene, and the like, and copolymers thereof, and mixtures thereof. Water-insoluble polymer precursors or monomers can also be poured on the chromonic matrix and subsequently polymerized/cross-linked to form a water-insoluble polymer on the chromonic matrix.

The water-insoluble polymer can be separated from the chromonic matrix, for example, by peeling it off. The water-insoluble polymer and chromonic matrix can be soaked in a basic aqueous solution before peeling to facilitate loosening the polymer from the matrix. The resulting nanostructured surface (for example, nanosized polymer posts) of the peeled water-insoluble polymer makes the polymer layer useful, for example, in antireflective/diffraction applications. Nanostructured metal surfaces can be used in field emission devices.

The method of the invention can also be used to make nanostructured metal surfaces such as, for example, nanosized metal meshes or grids. In order to make nanostructured metal surfaces, a metal salt can be added to the continuous chromonic phase before it is mixed with the discontinuous phase. That is, a metal salt can be added to the aqueous composition comprising a chromonic material before it is mixed with the discontinuous phase comprising a water-soluble polymer.

Preferred metal salts include noble metal salts. More preferred metal salts include silver salts (for example, silver nitrate, silver acetate, and the like), gold salts (for example, gold sodium thiomalate, gold chloride, and the like), platinum salts (for example, platinum nitrate, platinum chloride, and the like), and mixtures thereof. Most preferred metal salts include, silver nitrate, silver acetate, gold sodium thiomalate, gold chloride, and mixtures thereof.

Generally, the metal salt will be present in the continuous chromonic phase at a concentration of less than about 50 percent by weight of the continuous chromonic phase.

The resulting mixture can be applied onto the surface of a substrate and allowed to dry as described above. After the mixture is dry, the metal salt can be reduced via reduction methods known in the art. For example, the reduction can be accomplished by using a reducing agent (for example, tris(dimethylamino)borane, sodium borohydride, potassium borohydride, or ammonium borohydride), electron beam (e-beam) processing, or ultraviolet (UV) light.

The water-soluble polymer can be removed as described above. The chromonic matrix can also be removed using any means such as, for example by heating to decomposition (for example, by heating to higher than about 300°C). The resulting nanosized metal mesh or grid can be used, for example, in applications such as electro-magnetic interference (EMI) filters.

The method of the invention can also be used to make two-dimensional arrays of water-insoluble particles. Water-insoluble particles can be added to the discontinuous phase before it is mixed with the continuous chromonic phase. Typically, the concentration of water-insoluble particles in the resulting mixture (that is, the mixture of the continuous chromonic and discontinuous phases) will be in the range of about 1 to about 35 percent by weight of the total solids.

Preferred water-insoluble particles include, for example, substantially charge neutralized particles of metal, silica, diamond, and the like, and mixtures thereof.

Preferred metal particles include noble metal particles. More preferred metal particles include silver particles, gold particles, platinum particles, and mixtures and alloys thereof. Non-noble metal particles having a non-ionic surface such as, for example, particles with a passivated surface comprising iron can also be used. Preferably, metal particles are surface modified, for example, with alkyl thiols, alkyl glycol thiols, alkyl amines, or glycol amines.

The resulting mixture is applied onto the surface of a substrate and allowed to dry as described above, and the water-soluble polymer and chromonic matrix can optionally be removed as described above to yield a regular two-dimensional array of nanostructures (that is, an array of relatively uniformly sized and shaped nanostructures that are substantially evenly spaced). These arrays are useful in numerous applications. For example, nanostructured silica surfaces can be useful in micro-lens arrays, nanostructured surfaces of magnetic particles can be useful in magnetic recording applications, and nanostructured diamond surfaces can be useful as abrasives.

The methods of the invention can facilitate the fabrication of nanostructured surfaces over large areas (for example, areas greater than 1 cm² (preferably greater than 1 m²)). Depending upon the materials used, the nanostructured surfaces can be useful as protective coatings (for example, to provide corrosion resistance, diffusion barriers, thermal barriers, abrasion resistance, and/or ion bombardment protection) optical coatings (for example, to provide antireflective or antistatic properties, or as optical waveguides), conversion coatings (for example, to promote adhesion), and the like.

### EXAMPLES

Objects and advantages of this invention are further illustrated by the following examples, but the particular materials and amounts thereof recited in these examples, as well as other conditions and details, should not be construed to unduly limit this invention.

Unless otherwise noted, all reagents and compounds were or can be obtained from Aldrich Chemical Co., Milwaukee, WI.

As used herein,
"Purified water" refers to water available under the trade designation "OMNISOLVE" from EMD Chemicals, Inc., Gibbstown, NJ;
"APG 325" refers to a 70 weight percent aqueous solution of an alkyl polyglucoside, a non-ionic surfactant available from Cognis Corp. USA, Cincinnati, OH.

### Example 1 (Reference Example): Preparation of a Nanostructured Chromonic Coating Using Polyvinyl Alcohol

A mixture of purified water (10.0 g), lithium hydroxide (0.13 g), APG 325 (0.1 g), polyvinyl alcohol (1.0 g of a 20 weight percent aqueous solution of polyvinyl alcohol, approximately 75 percent hydrolyzed and having a molecular weight of approximately 2000) was magnetically stirred in a flask for approximately 15 minutes. The chromonic compound of Formula III (1.0 g) was then added to the mixture and the resultant mixture was magnetically stirred for an additional 30 minutes to provide a mixture for coating. This mixture was coated onto a glass microscope slide using a #4 wound wire coating rod. The coating was allowed to dry in air at room temperature for at least 5 minutes and was analyzed by optical microscopy using a Model DM4000M microscope (available from Leica Microsystems, Inc., Bannockburn, IL) at 1000 power. An optical micrograph of the coating is shown as a Figure, in which the dark features identify the separated polyvinyl alcohol phase and the lighter features identify the separated chromonic phase.

### Example 2 (Reference Example): Preparation of a Nanostructured Chromonic Coating Using Polypropylene Glycol 3000

A mixture of purified water (10.0 g), ammonium hydroxide (0.13 g of a 30 weight percent aqueous solution), APG 325 (0.1 g), polypropylene glycol 3000 (0.1 g; having a number average molecular weight of approximately 3000; obtained from Alfa Aesar, Ward Hill, MA) was magnetically stirred in a flask for approximately 15 minutes. The chromonic compound of Formula III (1.0 g) was then added to the mixture and the resultant mixture was magnetically stirred for an additional 30 minutes to provide a mixture for coating. This mixture was coated onto a glass microscope slide using a #4 wound wire coating rod. The coating was allowed to dry in air at room temperature for at least 5 minutes and was examined by optical microscopy using a Model DM4000M microscope (available from Leica Microsystems, Inc., Bannockburn, IL) at 1000 power. Dark and light features were observed and were identified as the separated polypropylene glycol and the chromonic phases, respectively.

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A method of making nanostructured surfaces comprising:
(a) making an aqueous mixture comprising (i) a discontinuous phase comprising a water-soluble polymer, (ii) a continuous phase comprising a chromonic material, and (iii) a non-ionic surfactant;
(b) applying said mixture onto the surface of a substrate;
(c) allowing said mixture to dry; and
(d) removing said water-soluble polymer after said mixture is dry.

2. A method of making nanostructured surfaces comprising:
(a) making an aqueous mixture comprising (i) a discontinuous phase comprising a water-soluble polymer and water-insoluble particles, (ii) a continuous phase comprising a chromonic material, and (iii) a non-ionic surfactant;
(b) applying said mixture onto the surface of a substrate; and
(c) allowing said mixture to dry.

3. The method of claim 1, wherein the aqueous mixture further comprises (iv) a metal salt.

4. The method of any one of claims 1 to 3 wherein said water-soluble polymer has a molecular weight of less than about 20,000.

5. The method of any one of claims 1 to 4 wherein said chromonic material is represented by one of the following general structures: 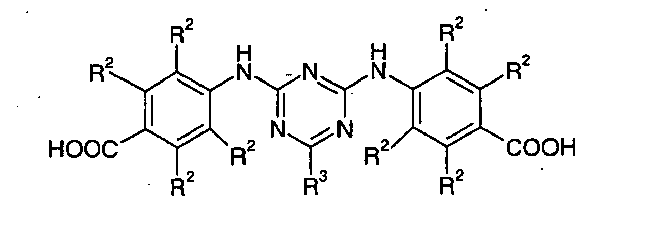 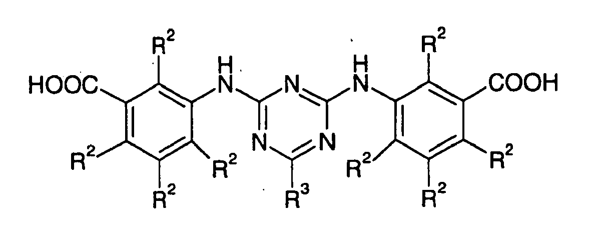 wherein
each R² is independently selected from the group consisting of electron donating groups, electron withdrawing groups, and electron neutral groups, and
R³ is selected from the group consisting of substituted and unsubstituted heteroaromatic rings and substituted and unsubstituted heterocyclic rings, said rings being linked to the triazine group through a nitrogen atom within the ring of R³, or zwitterions, proton tautomers, or salts thereof.

6. The method of claim 5 wherein said chromonic material is represented by one of the following structures: 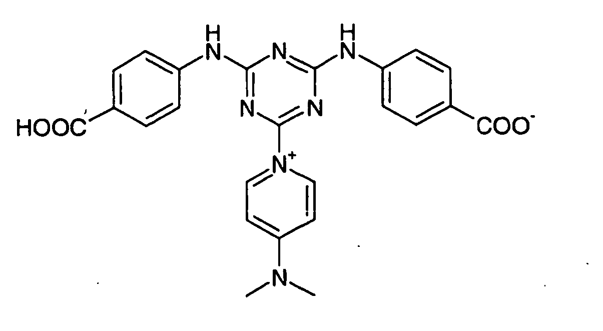 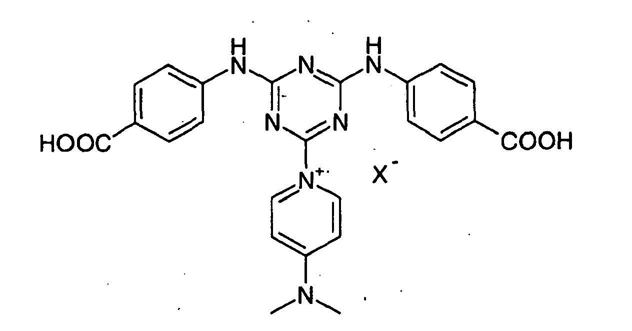 wherein X⁻ is a counterion.

7. The method of any one of claims 1 to 6 wherein the weight ratio of water-soluble polymer to chromonic material is between about 0.01:1 and about 0.5:1.

8. The method of any one of claims 1 to 7 wherein the weight ratio of non-ionic surfactant to chromonic material is between about 0.01:1 1 and about 0.3:1.

9. The method of any one of claims 1 or 3 to 8 wherein said discontinuous phase further comprises water-insoluble particles.

10. The method of claim 9 wherein said particles are selected from the group consisting of metal particles, silica particles, and diamond particles.

11. The method of any one of claims 1, 2 or 4 to 10 wherein said aqueous mixture further comprises a metal salt.

12. The method of claim 3 or 11 wherein said metal salt is selected from the group consisting of silver salts, gold salts, platinum salts, and mixtures thereof.

13. The method of any one of claims 3, 11 or 12 wherein said metal salt is reduced after said mixture is dry.

14. The method of any one of claims 2 to 13 further comprising removing said water-soluble polymer after said mixture is dry.

15. The method of claim 1 or 14 further comprising removing said chromonic material.

16. The method of claim 1 or 14 further comprising applying a molten metal on said chromonic material after removing said water-soluble polymer.

17. The method of claim 1 or 14 further comprising applying a water-insoluble polymer on said chromonic material after removing said water-soluble polymer.

18. The method of claim 1 or 14 further comprising applying a water-insoluble polymer precursor on said chromonic material after removing said water-soluble polymer, and polymerizing said precursor.

19. The method of any one of claims 16 to 18 further comprising separating said molten metal or said water-insoluble polymer from said chromonic material.

20. An article comprising a nanostructured surface obtainable by the method of any one of claims 1 to 19.

21. An aqueous composition comprising: a water-soluble polymer, a chromonic material, a non-ionic surfactant, and at least one of (i) water-insoluble particles and (ii) a metal salt.

## Patentansprüche

1. Verfahren zur Herstellung nanostrukturierter Oberflächen, umfassend:
(a) Herstellen einer wässrigen Mischung, umfassend (i) eine diskontinuierliche Phase, umfassend ein wasserlösliches Polymer, (ii) eine kontinuierliche Phase, umfassend ein chromonisches Material, und (iii) ein nichtionisches Tensid;
(b) Aufbringen der Mischung auf die Oberfläche eines Substrats;
(c) Trocknen lassen der Mischung; und
(d) Entfernen des wasserlöslichen Polymers nachdem die Mischung trocken ist.

2. Verfahren zur Herstellung nanostrukturierter Oberflächen, umfassend:
(a) Herstellen einer wässrigen Mischung, umfassend (i) eine diskontinuierliche Phase, umfassend ein wasserlösliches Polymer und wasserunlösliche Teilchen, (ii) eine kontinuierliche Phase, umfassend ein chromonisches Material, und (iii) ein nichtionisches Tensid;
(b) Aufbringen der Mischung auf die Oberfläche eines Substrats; und
(c) Trocknen lassen der Mischung.

3. Verfahren nach Anspruch 1, wobei die wässrige Mischung ferner (iv) ein Metallsalz umfasst.

4. Verfahren nach einem der Ansprüche 1 bis 3, wobei das wasserlösliche Polymer ein Molekulargewicht von weniger als etwa 20.000 aufweist.

5. Verfahren nach einem der Ansprüche 1 bis 4, wobei das chromonische Material durch eine der folgenden allgemeinen Strukturen dargestellt ist: 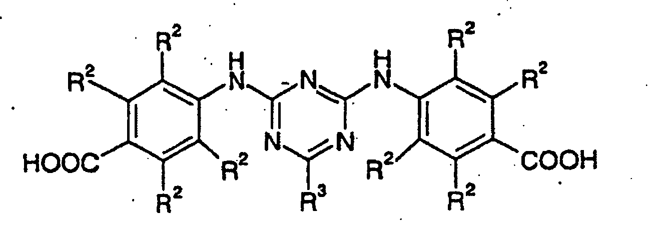 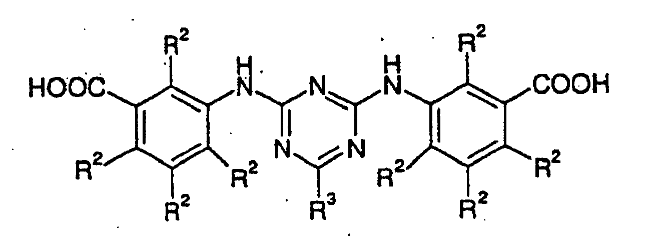 wobei
jedes R² unabhängig ausgewählt ist aus der Gruppe, bestehend aus elektronenabgebenden Gruppen, elektronenziehenden Gruppen und elektronenneutralen Gruppen, und
R³ ausgewählt ist aus der Gruppe, bestehend aus substituierten und unsubstituierten heteroaromatischen Ringen und substituierten und unsubstituierten heterocyclischen Ringen, wobei die Ringe mit der Triazingruppe über ein Stickstoffatom innerhalb des Rings von R³ verbunden sind, oder Zwitterionen, Protonentautomere oder Salze davon.

6. Verfahren nach Anspruch 5, wobei das chromonische Material durch eine der folgenden Strukturen dargestellt ist: 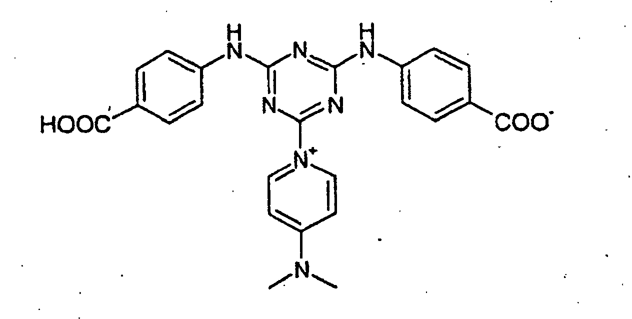 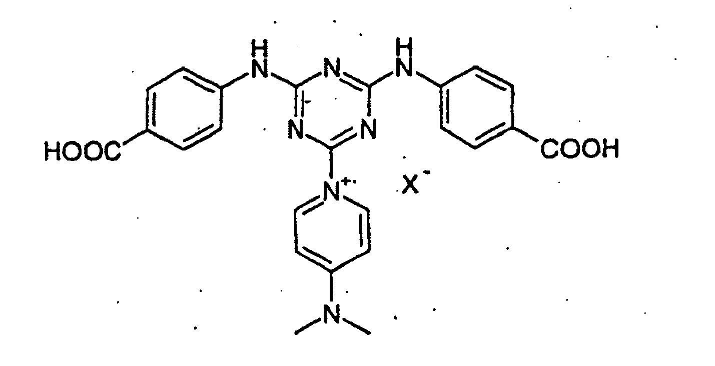 wobei X⁻ ein Gegenion ist.

7. Verfahren nach einem der Ansprüche 1 bis 6, wobei das Gewichtsverhältnis von wasserlöslichem Polymer zu chromonischem Material zwischen etwa 0,01:1 und etwa 0,5:1 liegt.

8. Verfahren nach einem der Ansprüche 1 bis 7, wobei das Gewichtsverhältnis von nichtionischem Tensid zu chromonischem Material zwischen etwa 0,01:1 und etwa 0,3:1 liegt.

9. Verfahren nach einem der Ansprüche 1 oder 3 bis 8, wobei die diskontinuierliche Phase ferner wasserunlösliche Teilchen umfasst.

10. Verfahren nach Anspruch 9, wobei die Teilchen ausgewählt sind aus der Gruppe, bestehend aus Metallteilchen, Siliciumdioxidteilchen und Diamantteilchen.

11. Verfahren nach einem der Ansprüche 1, 2 oder 4 bis 10, wobei die wässrige Mischung ferner ein Metallsalz umfasst.

12. Verfahren nach Anspruch 3 oder 11, wobei das Metallsalz ausgewählt ist aus der Gruppe, bestehend aus Silbersalzen, Goldsalzen, Platinsalzen und Gemischen davon.

13. Verfahren nach einem der Ansprüche 3, 11 oder 12, wobei das Metallsalz reduziert wird, nachdem die Mischung trocken ist.

14. Verfahren nach einem der Ansprüche 2 bis 13, ferner umfassend das Entfernen des wasserlöslichen Polymers, nachdem die Mischung trocken ist.

15. Verfahren nach Anspruch 1 oder 14, ferner umfassend das Entfernen des chromonischen Materials.

16. Verfahren nach Anspruch 1 oder 14, ferner umfassend das Aufbringen eines geschmolzenen Metalls auf dem chromonischen Material nach dem Entfernen des wasserlöslichen Polymers.

17. Verfahren nach Anspruch 1 oder 14, ferner umfassend das Aufbringen eines wasserunlöslichen Polymers auf dem chromonischen Material nach dem Entfernen des wasserlöslichen Polymers.

18. Verfahren nach Anspruch 1 oder 14, ferner umfassend das Aufbringen eines wasserunlöslichen Polymervorläufers auf dem chromonischen Material nach dem Entfernen des wasserlöslichen Polymers und Polymerisieren des Vorläufers.

19. Verfahren nach einem der Ansprüche 16 bis 18, ferner umfassend das Trennen des geschmolzenen Metalls oder des wasserunlöslichen Polymers von dem chromonischen Material.

20. Gegenstand, umfassend eine nanostrukturierte Oberfläche, die mittels des Verfahrens nach einem der Ansprüche 1 bis 19 erhalten werden kann.

21. Wässrige Zusammensetzung umfassend: ein wasserlösliches Polymer, ein chromonisches Material, ein nichtionisches Tensid und mindestens eins ausgewählt aus (i) wasserunlöslichen Teilchen oder (ii) einem Metallsalz.

## Revendications

1. Procédé de fabrication de surfaces nanostructurées comprenant les étapes consistant à :
(a) préparer un mélange aqueux comprenant (i) une phase discontinue comprenant un polymère hydrosoluble, (ii) une phase continue comprenant un matériau chromonique, et (iii) un tensioactif non ionique ;
(b) appliquer ledit mélange sur la surface d'un substrat ;
(c) laisser ledit mélange sécher ; et
(d) retirer ledit polymère hydrosoluble une fois que ledit mélange est sec.

2. Procédé de fabrication de surfaces nanostructurées comprenant les étapes consistant à :
(a) préparer un mélange aqueux comprenant (i) une phase discontinue comprenant un polymère hydrosoluble et des particules insolubles dans l'eau, (ii) une phase continue comprenant un matériau chromonique, et (iii) un tensioactif non ionique ;
(b) appliquer ledit mélange sur la surface d'un substrat ; et
(c) laisser ledit mélange sécher.

3. Procédé selon la revendication 1, dans lequel le mélange aqueux comprend en outre (iv) un sel métallique.

4. Procédé selon l'une quelconque des revendications 1 à 3 dans lequel ledit polymère hydrosoluble a un poids moléculaire inférieur à environ 20 000.

5. Procédé selon l'une quelconque des revendications 1 à 4 dans lequel ledit matériau chromonique est représenté par l'une des structures générales suivantes : 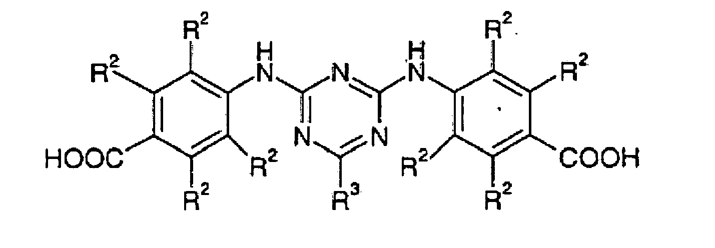 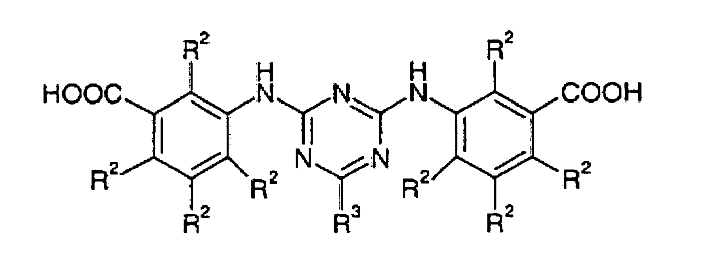 dans lesquelles
chaque R² est indépendamment choisi dans le groupe constitué par des groupes donneurs d'électrons, des groupes accepteurs d'électrons et des groupes électroniquement neutres, et
R³ est choisi dans le groupe constitué par des cycles hétéroaromatiques substitués et non substitués et des hétérocycles substitués et non substitués, lesdits cycles étant liés au groupe triazine par un atome d'azote à l'intérieur du cycle de R³ ou des ions amphotères, des tautomères protoniques, ou des sels de ceux-ci.

6. Procédé selon la revendication 5 dans lequel ledit matériau chromonique est représenté par l'une des structures suivantes : 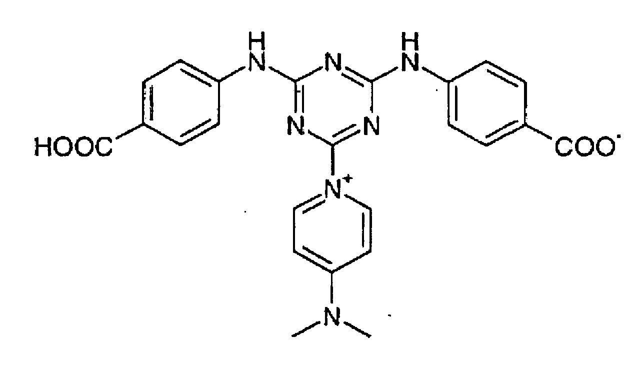 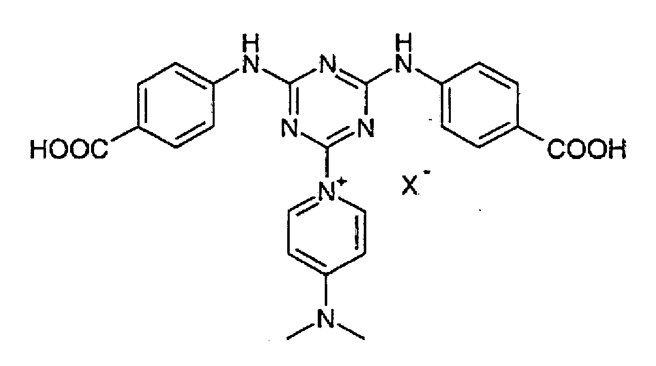 dans lesquelles X⁻ est un contre-ion.

7. Procédé selon l'une quelconque des revendications 1 à 6 dans lequel le rapport pondéral entre le polymère hydrosoluble et le matériau chromonique se situe entre environ 0,01 : 1 et environ 0,5 : 1.

8. Procédé selon l'une quelconque des revendications 1 à 7 dans lequel le rapport pondéral entre le tensioactif non ionique et le matériau chromonique se situe entre environ 0,01 : 1 et environ 0,3 : 1.

9. Procédé selon l'une quelconque des revendications 1 ou 3 à 8 dans lequel ladite phase discontinue comprend en outre des particules insolubles dans l'eau.

10. Procédé selon la revendication 9 dans lequel lesdites particules sont choisies dans le groupe constitué par des particules de métal, des particules de silice et des particules de diamant.

11. Procédé selon l'une quelconque des revendications 1, 2 ou 4 à 10 dans lequel ledit mélange aqueux comprend en outre un sel métallique.

12. Procédé selon la revendication 3 ou 11 dans lequel ledit sel métallique est choisi dans le groupe constitué par les sels d'argent, les sels d'or, les sels de platine et les mélanges de ceux-ci.

13. Procédé selon l'une quelconque des revendications 3, 11 ou 12 dans lequel ledit sel métallique est réduit une fois que ledit mélange est sec.

14. Procédé selon l'une quelconque des revendications 2 à 13 comprenant en outre le retrait dudit polymère hydrosoluble une fois que ledit mélange est sec.

15. Procédé selon la revendication 1 ou 14 comprenant en outre le retrait dudit matériau chromonique.

16. Procédé selon la revendication 1 ou 14 comprenant en outre l'application d'un métal fondu sur ledit matériau chromonique après le retrait dudit polymère hydrosoluble.

17. Procédé selon la revendication 1 ou 14 comprenant en outre l'application d'un polymère insoluble dans l'eau sur ledit matériau chromonique après le retrait dudit polymère hydrosoluble.

18. Procédé selon la revendication 1 ou 14 comprenant en outre l'application d'un précurseur de polymère insoluble dans l'eau sur ledit matériau chromonique après le retrait dudit polymère hydrosoluble, et la polymérisation dudit précurseur.

19. Procédé selon l'une quelconque des revendications 16 à 18 comprenant en outre la séparation dudit métal fondu ou dudit polymère insoluble dans l'eau dudit matériau chromonique.

20. Article comprenant une surface nanostructurée pouvant être obtenue par le procédé de l'une quelconque des revendications 1 à 19.

21. Composition aqueuse comprenant : un polymère hydrosoluble, un matériau chromonique, un tensioactif non ionique, et l'un au moins de (i) des particules insolubles dans l'eau et (ii) un sel métallique.
